# EUROPEAN PATENT SPECIFICATION

(11) **EP 0 816 038 B1**
(45) Date of publication and mention of the grant of the patent: **14.08.2002**
(21) Application number: 97304099.1
(22) Date of filing: 12.06.1997
(51) Int. Cl.: B29C 33/38, B29C 33/56, B29C 33/02, C23C 16/16

(54) **Method of manufacturing a moulding tool**
Verfahren zum Herstellen eines Formwerkzeuges
Méthode de fabrication d'un outil de moulage

(30) Priority: 06.07.1996 GB 9613727
(43) Date of publication of application: 07.01.1998
(73) Proprietor: FORD MOTOR COMPANY LIMITED, Brentwood, Essex CM13 3BW (GB); FORD FRANCE S.A., 92506 Rueil-Malmaison Cédex (FR); FORD-WERKE AKTIENGESELLSCHAFT, 50735 Köln (DE)
(72) Inventor: Blake, Michael John, Chorley, Lancashire PR6 8RA (GB)
(74) Representative: Messulam, Alec Moses

(56) References cited:
- WO-A-97/18074
- US-A- 3 638 299
- US-A- 5 260 014
- US-A- 5 407 487
- US-A- 5 470 651
- PATENT ABSTRACTS OF JAPAN vol. 011, no. 114 (M-579), 10 April 1987 & JP 61 258721 A (HIKARI WADA), 17 November 1986

## Description

This invention relates to methods of manufacturing moulding tools and to moulding tools.

Most metal-faced tools used in the production of plastics mouldings comprise a metal shell, usually of nickel, that defines the moulding surface of the tool, and a backing structure, usually of a composite material such as a filled polymer, in which heat control means are disposed, such as conduits for the circulation of heating fluid or coolant. A typical process for manufacturing such tool starts with the production of a master model having a shaped surface matching that of the product to be moulded. A mandrel is then formed from the master model having a "show" surface that is a positive or negative reproduction of the shaped surface of the master model. Any surface finish that is required on the moulded product, such as a grain pattern, can be applied to the show surface of the mandrel. A framework is built around the show surface and a metal coating is deposited on the surface to form a shell. Several alternative methods of depositing metal coatings on mandrels are available, for example vapour deposition, as disclosed in US-A-5470651, or electro-deposition as disclosed in Japanese patent publication No 7032369-A. Heating elements are mounted within the framework, and the backing material is cast into the framework around the heating elements to provide a rigid support for the metal shell. The mandrel is then stripped from the shell, leaving the metal coating supported by the backing material to form the working face of the moulding tool. These numerous steps increase the cost of manufacturing tooling.

According to the present invention, a method of manufacturing a moulding tool comprises the steps disclosed in attached claim 1.

Since the metal coating or shell is formed directly upon the surface of a mandrel which incorporates heat control means, the coated mandrel is ready for use as a moulding tool, eliminating the need to produce a shell in a separate step. Moreover, since the metal coating is not stripped from the mandrel, a thinner coating of metal can be used, resulting in a cost saving where expensive materials such as nickel are used. For example, conventional metal-faced tools have a shell of from 5-12mm in thickness, the coating used in the present invention may be as low as 0.5mm in thickness, and need not normally be thicker than 3 or 4mm. Coatings having a thickness of0.5-2mm, eg about 1mm, are preferred.

The selection of the process of vapour deposition to form the metal coating is particularly advantageous. Not only is it quicker than electro-deposition, but it also results in a coating of substantially uniform surface thickness so that the external surface of the deposited layer can be used directly as the moulding surface of the tool. In addition, the metal coating can be worked on to produce a desired surface, or otherwise modified.

The mandrel serves not only to define the shape of working surface of the finished tool, but also to support the working surface when the tool is in use. The material from which the mandrel is made should therefore be capable of being moulded to define a moulding surface, be dimensionally stable over the working temperature of the tool, have a low coefficient of thermal expansion, preferably as near as possible to that of the metal coating, and have good adhesion to the metal coating.

Where vapour deposition is used, the material must be thermally stable up to at least 185°C and preferably up to 210°C. Metals and alloys may be used. Aluminium is a particularly suitable metal in view of its low density. Preferred materials for use in this process are ceramic-based composites, which typically comprise a matrix and a filler. The matrix may be a chemically bonded inorganic material, such a cement, or an organic polymeric material such as epoxy, phenolic polyester or polyamide resins. The choice of resin will depend upon the conditions to which the mandrel is to be subjected in the subsequent manufacturing process and in use. Suitable filler materials include silica, alumina, titania, and metal flakes.

Preferably the mandrel is formed from a chemically-bonded ceramic moulding material such as that sold under the trade mark DENSIT by Densit A/S of Aalborg, Denmark. This material is based on calcium oxide (21% by weight), silica (16% by weight),alumina and titania (58% by weight). When mixed with water the material sets to form a bonded ceramic with a specific heat of about 0.9kJ/kg°C, a thermal conductivity of about 1.5W/m°C and a coefficient of thermal expansion of 1.0x10-5/°C.

An alternative composite material for the mandrel is an alumina-filled epoxy resin-based casting material manufactured by Akemi, Inc of Eaton Rapids Michigan, USA under product number AC2319. This material has a low coefficient of thermal expansion (about 21x10 -6/°C), a low shrinkage rate (0.0002 cm/cm), and is thermally stable at temperatures in the vapour deposition of nickel.

The present invention also provides a moulding tool according to the features of claim 7 comprising a mandrel composed of a resin-bonded ceramic composition having a shaped surface conforming to the shape of a product to be moulded, temperature control means incorporated in the mandrel, and a coating on the shaped surface comprising vapour-deposited nickel.

The temperature control means may comprise for example ducting for heating fluid such as hot air or water or steam, or may comprise electrical heating elements. The temperature control means may also include a supporting structure that not only locates the heating means in the mandrel, but also reinforces the mandrel.

A preferred embodiment of the invention will now be described, by way of example only, with reference to the following drawings in which:-
Figure 1 is a perspective view of a mould master;
Figure 2 is a perspective view of the mould master of Figure 1 encased in shuttering;
Figure 3 is a perspective view of a mandrel produced from the mould master of Figure 1 in accordance with the method of the invention;
Figure 4 is a perspective view of a moulding tool produced from the mandrel of Figure 3; and
Figure 5 is a cross-section through a pair of moulding tools produced in accordance with the invention.

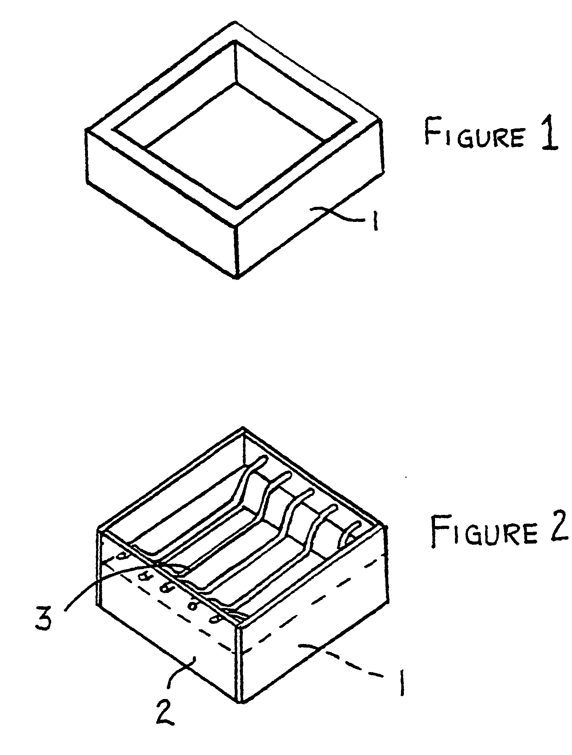

Referring to the drawings, Figure 1 shows in perspective a master model 1 having a shaped surface corresponding to that of a component for which tooling is to be manufactured, in this case a rectangular tray with tapering walls. The master model may be produced by any conventional technique from a dimensionally stable material, for example by a computer controlled milling machine. The inner surface of the master model corresponds in size and shape to the shaped surface of the finished product, but is undersized by an amount sufficient to allow for the thickness of metal coating applied to the tooling in a later stage of the manufacturing process (about 1mm in this example).

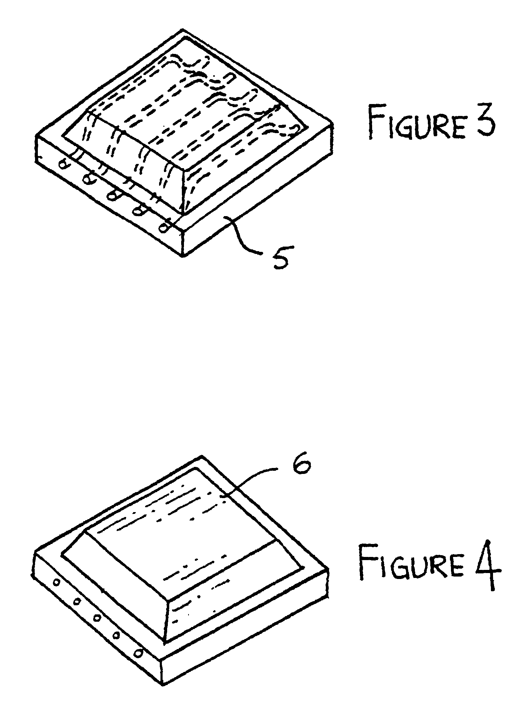

In accordance with the invention, the master mould 1 is encased in shuttering 2, as seen in Figure 2, and temperature control means in the form of an array of metal pipes 3, eg of stainless steel, for conducting a heating medium are mounted in the shuttering by means of a supporting framework (which has been omitted from the drawings for clarity). Alternatively, electrical heating elements may be used. Inserts, guide pins, fixtures, thermocouples, vacuum breakers and other components normally incorporated in tooling may be installed at this stage.

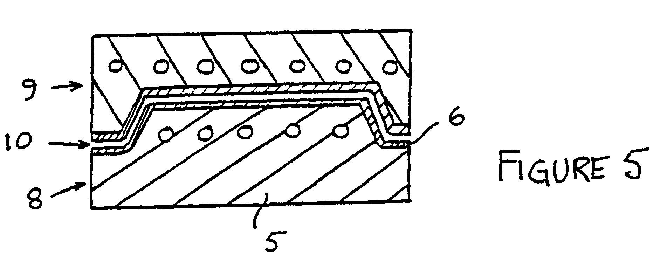

A chemically-bonded ceramic material such as that sold under the trade mark DENSIT is then cast into the shuttering to fill the recess in the master mould and to cover the array of copper pipes 3. After the ceramic material has been cured, the shuttering is removed to reveal a mandrel 5 (Figure 3).

The mandrel 5 is then subjected to a nickel vapour-deposition process using conventional nickel-deposition equipment (not illustrated) which comprises a chamber into which nickel carbonyl vapour can be introduced. The mandrel is heated to a temperature in the range 180-190°C by circulating a heating fluid through the pipes 3 in the mandrel. The nickel carbonyl decomposes on the surface of the mandrel to deposit a coating 6 of nickel. The deposition process continues until the nickel coating has built up to the required thickness, eg 0.5-3mm.

The coated mandrel is illustrated in figure 4.. The exterior surface of the mandrel can be subjected to a finishing treatment. For example the surface may be polished. Alternatively, since the vapour deposition process produces a layer of nickel with a grain structure that is capable of being further worked, the coated surface can be further treated to produce a desired surface texture.

If necessary further work may be carried out on the mandrel to modify the shaped surface. For example, the metal coating may be removed from selected areas of the mandrel, the backing material removed, built up or reshaped in the exposed areas, and the re-worked areas subjected to a further vapour deposition treatment. Masking techniques can be used ensure that coating is removed selectively from the mandrel and, when subjecting the mandrel to further vapour deposition, to prevent accumulation of nickel on areas of the surface that have already been coated. Inserts or other attachments to the surface of the mandrel may be added for example by welding to the metal coating if desired.

The tool produced by the illustrated process is dimensionally stable and is capable of repeated use without significant deterioration.

Figure 5 illustrates moulding equipment comprising a lower mould half 8, which consists of the tool illustrated in Figure 4, and an upper mould half 9 produced by a similar process but complementary in shape to the lower tool half so that when the two mould halves are brought together they define a moulding cavity 10 in the shape of a recessed tray.

## Claims

1. A method of manufacturing a moulding tool comprising the steps of
i) producing a master mould (1);
ii) encasing the master mould (1) in shuttering (2);
iii) mounting an array of metal pipes (3) within the shuttering (2);
iv) casting a moulding material into the shuttering (2);
v) curing the moulding material;
vi) removing the mandrel (5) so formed from the shuttering and from the master mould (1); and
vii) forming a metal coating (6) upon the surface of the mandrel (5).

2. A method as claimed in Claim 1 where the metal coating is deposited by vapour deposition.

3. A method as claimed in Claim 1 where the metal coating is deposited by electro-deposition.

4. A method as claimed in any one of Claims 1 to 3 wherein the metal of the coating is nickel.

5. A method as claimed in any one of the preceding claims wherein the thickness of the metal coating (6) is in the range 0.5 to 2 mm.

6. A method as claimed in any one of the preceding claims wherein the moulding material is a chemically-bonded ceramic material

7. A moulding tool made in accordance with a method as claimed in any one of the preceding claims and comprising a mandrel (5) composed of a resin-bonded ceramic composition having a shaped surface conforming to the shape of a product to be moulded, having heating pipes (3) embedded in the mandrel (5) and a metal coating on the shaped surface of the mandrel (5).

## Patentansprüche

1. Verfahren zur Herstellung eines Gießwerkzeuges, folgende Schritte aufweisend:
i) Herstellung eines Urmodells (1);
ii) Einschließen des Urmodells (1) in eine Schalung (2) ;
iii) Einbauen eines Metallrohrgitters (3) in die Schalung (2);
iv) Vergießen von Gießstoff in die Schalung (2);
v) Aushärten des Gießstoffes;
vi) Entfernen des so hergestellten Kerns (5) aus der Schalung und von dem Urmodell (1); und
vii) Formen einer Metallbeschichtung (6) an der Oberfläche des Kerns (5).

2. Verfahren nach Anspruch 1, worin die Metallbeschichtung durch Aufdampfen aufgebracht wird.

3. Verfahren nach Anspruch 1, worin die Metallbeschichtung galvanisch aufgebracht wird.

4. Verfahren nach einem beliebigen der Ansprüche 1 bis 3, worin das Beschichtungsmetall Nickel ist.

5. Verfahren nach einem beliebigen der vorangehenden Ansprüche, worin die Schichtdicke der Metallbeschichtung (6) im Bereich von 0,5 bis 2 mm liegt.

6. Verfahren nach einem beliebigen der vorangehenden Ansprüche, worin das Gießmaterial ein chemisch gebundener Keramikwerkstoff ist.

7. Gießwerkzeug, hergestellt in einem Verfahren nach einem beliebigen der vorangehenden Ansprüche, und einen Kern (5) beinhaltend, der aus einem harzgebundenen Keramikverbundwerkstoff besteht und eine geformte Fläche aufweist, die der Gestalt eines zu gießenden Produktes angepaßt ist, mit in dem Kern (5) eingebetteten Heizleitungen (3) und einer Metallbeschichtung an der geformten Oberfläche des Kerns (5).

## Revendications

1. Procédé de fabrication d'un outil de moulage comprenant les étapes consistant à
i) fabriquer un moule maître (1),
ii) incorporer le moule maître (1) dans un coffrage (2),
iii) monter un réseau de tuyaux métalliques (3) à l'intérieur du coffrage (2),
iv) couler un matériau de moulage dans le coffrage (2),
v) cuire le matériau de moulage,
vi) retirer le noyau de moule (5) ainsi formé du coffrage et du moule maître (1), et
vii) former un revêtement métallique (6) sur la surface du noyau de moule (5).

2. Procédé selon la revendication 1, où le revêtement métallique est déposé par dépôt en phase vapeur.

3. Procédé selon la revendication 1, où le revêtement métallique est déposé par dépôt électrolytique.

4. Procédé selon l'une quelconque des revendications 1 à 3, dans lequel le métal du revêtement est du nickel.

5. Procédé selon l'une quelconque des revendications précédentes, dans lequel l'épaisseur du revêtement métallique (6) est dans la plage de 0,5 à 2 mm.

6. Procédé selon l'une quelconque des revendications précédentes, dans lequel le matériau de moulage est un matériau de céramique chimiquement lié.

7. Outil de moulage fabriqué conformément au procédé selon l'une quelconque des revendications précédentes et comprenant un noyau de moule (5) composé d'une composition de céramique liée par une résine présentant une surface mise en forme se conformant à la forme d'un produit à mouler, comportant des tuyaux de chauffage (3) incorporés dans le noyau de moule (5) et un revêtement métallique sur la surface mise en forme du noyau de moule (5).
